# EUROPÄISCHE PATENTSCHRIFT

(11) **EP 1 829 584 B1**
(45) Veröffentlichungstag und Bekanntmachung des Hinweises auf die Patenterteilung: **04.12.2013**
(21) Anmeldenummer: 07001615.9
(22) Anmeldetag: 25.01.2007
(51) Int. Cl.: A62C 99/00, G09B 19/00, F41H 9/06

(54) **Simulation von Rauchgas bei Brandversuchen**
Simulation of smoke gas during fire tests
Simulation de gaz de fumée lors d'essais de réaction au feu

(30) Priorität: 03.03.2006 DE 102006009951
(43) Veröffentlichungstag der Anmeldung: 05.09.2007
(73) Patentinhaber: I.F.I. Institut für Industrieaerodynamik GmbH, 52074 Aachen (DE)
(72) Erfinder: Konrath, Bernd, 52074 Aachen (DE)
(74) Vertreter: Schwabe - Sandmair - Marx

(56) Entgegenhaltungen:
- DE-A1- 10 233 547
- DE-A1- 19 926 773
- US-A- 2 070 038
- US-A- 4 983 124

## Beschreibung

Die Erfindung betrifft ein Verfahren und eine Vorrichtung zur Simulation von Rauchgas bei Brandversuchen.

Häufig werden zur entrauchungstechnischen Abnahme, insbesondere von Sonderbauwerken so genannte Realversuche von den Genehmigungsbehörden gefordert. Die Durchführung solcher Funktionsüberprüfungen wird beispielhaft in der Richtlinie VDI 6019 Blatt 1 geregelt. Dort wird auch die Brandsimulationsvorrichtung gemäß dem deutschen Patent Nr. 102 04 835 beschrieben, in welcher auch auf die Sichtbarmachung der Strömung hingewiesen wird. Hierzu soll dem Heißgasstrom (= Plume) ein Nebelfluid zugegeben werden. Übliche Nebelfluide bestehen aus Wassertröpfchen, die sich an Polypropylenglykol-Molekülen anlagern. Sie verdampfen bereits bei einer Temperatur von ca. 80°C, sind also ungeeignet zur Strömungssichtbarmachung bei großen Wärmefreisetzungen und den hiermit verbundenen hohen Temperaturen. Häufig wird auch Rauchgaspulver zur Strömungssichtbarmachung bei Brandsimulationen verbrannt. Nachteilig ist hier, dass die Verbrennungsrückstände dieser Substanzen häufig gesundheitsschädlich sind. Ferner können sich die Verbrennungsrückstände an Wänden absetzen, so dass diese nach Beendigung der Brandversuche gereinigt werden müssen.

Weitere Beispiele sind in DE 199 26 773 und US 2070038 offenbart.

Die Erfindung soll die beschriebenen Nachteile des Standes der Technik überwinden. Diese Aufgabe wird durch ein Verfahren gemäß dem Anspruch 1 und durch eine Vorrichtung gemäß dem Anspruch 9 gelöst. Die Unteransprüche definieren bevorzugte Ausführungsformen der Erfindung.

Die Erfindung beschreibt eine Möglichkeit, die Strömung bei Brandsimulationen - auch bei großen Wärmefreisetzungen und hohen Temperaturen sichtbar machen zu können. Das Ziel wird insbesondere dadurch erreicht, dass der Ausgangsstoff zur Sichtbarmachung (z. B. Paraffinöl) in einen anderen Aggregatzustand, nämlich in die Dampfform, überführt wird. Es wird also ein geeignetes Öl verdampft, ohne dieses zu verbrennen. Eine Verdampfung ohne Verbrennung wird erfindungsgemäß erreicht durch einen Erwärmungsprozess unter Ausschluss von Sauerstoff, da die Verdampfungstemperatur (≈ 400°C) wesentlich oberhalb der Flammpunkttemperatur (≈ 180°C) liegt. Alle Ausgangsstoffe mit solchen Eigenschaften, die zur Sichtbarmachung geeignet sind, können verwendet werden. Eine bevorzugte Anwendung für diese Vorrichtung ergibt sich in Verbindung mit Brandsimulationseinrichtungen.

Die Erfindung wird im Folgenden anhand eines Ausführungsbeispiels unter Bezugnahme auf die beiliegenden, schematischen Zeichnungen näher erläutert. Es zeigen:
- Fig. 1: einen Vertikalschnitt durch eine typische Anordnung, und
- Fig. 2: eine Aufsicht auf die Anordnung.

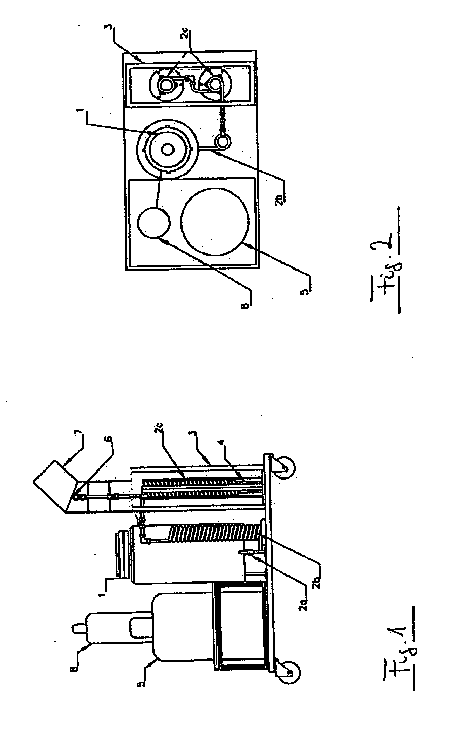

Wie in Fig. 1 dargestellt, wird einem Öltank 1 Öl entnommen und über eine Steigleitung 2a - intern oder extern - und eine Anschlussleitung 2b einer Heizspirale 2c zugeführt. Der Heizspirale 2c, die von einem Schutzrohr 3 ummantelt ist, wird über einen Brenner 4 Wärme zugeführt. Die Anschlussleitung 2b dient zur Kühlung.

Der Brenner 4 wird gasbeheizt, z. B. mittels eines Brenngases aus einer Gasflasche 5. Das dampfförmige Öl kann über eine geeignete Düse 6 und einen Strahlteiler 7, der optional verwendet werden kann, im Heißgas-Plume oberhalb einer (nicht dargestellten) Brandsimulationsvorrichtung zugegeben werden.

Als möglicher Antrieb zur Förderung des Öls kann Stickstoff aus einer Stickstoffflasche 8 verwendet werden, welcher den Öltank 1 unter den erforderlichen Überdruck setzt, so dass das Öl in die Steigleitung 2a eingedrückt wird.

## Patentansprüche

1. Verfahren zur Simulation von Rauchgas bei Brandversuchen, bei dem der Heißgasströmung oberhalb einer Brändversuchsvorrichtung unter Sauerstoffausschluss verdampftes bzw. verdampfendes Öl zugeführt wird.

2. Verfahren nach Anspruch 1, bei dem das Öl dem sauerstoffarmen bzw. sauerstofflosen Teil der Heißgasströmung zugeführt wird.

3. Verfahren nach Anspruch 1 oder 2, bei dem das Öl vor der Zuführung zu der Heißgasströmung erwärmt wird, insbesondere durch indirekten Wärmetausch.

4. Verfahren nach Anspruch 3, bei dem das Öl auf eine Temperatur erwärmt wird, die oberhalb seiner Flammpunkttemperatur liegt.

5. Verfahren nach Anspruch 3 oder 4, bei dem das Öl auf eine Temperatur erwärmt wird, die bis an seine Verdampfungstemperatur heran reicht.

6. Verfahren nach einem der Ansprüche 3 bis 5, bei dem das Öl indirekt, insbesondere in einer Ölleitung mit Hilfe mindestens eines Gasbrenners (4) erwärmt wird, wobei infolge einer hohen Heizleistung der verwendeten Gasbrenner (4) eine große Verdampfungsrate mit großen simulierten Rauchgasmengen eingestellt werden kann

7. Verfahren nach einem der Ansprüche 1 bis 6, bei dem die Ölförderung durch Gasdruck sichergestellt wird, insbesondere durch den Druck des Gases, das zur Ölerwärmung verwendet wird, oder durch ein separat vorgesehenes, speziell inertes, Transportgas.

8. Verfahren nach einem der Ansprüche 1 bis 7, bei dem das Öl der Heißgasströmung mittels einer Düse (6) zugeführt wird, wobei insbesondere durch Verwendung eines Strahlaufweiters (7) eine hohe Dampfdichte zur Simulation einer starken Sichttrübung erzielt wird.

9. Vorrichtung zur Simulation von Rauchgas bei Brandversuchen, **dadurch gekennzeichnet, dass** sie einen Ölförderer (2a, 2b, 2c) aufweist, der eine aufsteigende Förderstrecke umfasst, welche unter Sauerstoffausschluss verdampftes bzw. verdampfendes Öl in die Heißgasströmung oberhalb einer Brandversuchsvorrichtung zuführen kann.

10. Vorrichtung nach Anspruch 9, **dadurch gekennzeichnet, dass** sie eine Öl-Erwärmungseinrichtung umfasst, insbesondere mindestens einen Gasbrenner (6), der das Öl in der Förderstrecke (2a, 2b, 2c), insbesondere einer Ölleitung (2c), durch indirekte äußere Beaufschlagung erwärmt.

11. Vorrichtung nach Anspruch 9 oder 10, **dadurch gekennzeichnet, dass** sie ein Gasdruckfördermittel für das Öl umfasst, insbesondere gespeist durch den Druck des Gases, das zur Ölerwärmung verwendet wird, oder durch ein separat vorgesehenes, speziell inertes, Transportgas.

12. Vorrichtung nach einem der Ansprüche 9 bis 11, **dadurch gekennzeichnet, dass** sie einen Ölvorrat (1), einen Erwärmungs- und/oder Fördergasvorrat (5), die Ölförderungs- und Erwärmungsstrecke (2a, 2b, 2c) und die Öl-Erwärmungseinrichtung (4) umfasst, speziell in einer abgeschlossenen bzw. unabhängigen und vorteilhafterweise transportablen Einheit.

13. Vorrichtung nach einem der Ansprüche 9 bis 12, **dadurch gekennzeichnet, dass** zur Öl-Erwärmung und/oder Öl-Verdampfung keine externe Energiequelle, z. B. Strom, benutzt wird.

14. Vorrichtung nach einem der Ansprüche 9 bis 13, **dadurch gekennzeichnet, dass** durch Verwendung eines Strahlaufweiters (7) am Austritt der Ölförderstrecke eine hohe Dampfdichte zur Simulation einer starken Sichttrübung erzielt wird.

## Claims

1. A method for simulating smoke gas in fire tests, wherein vaporised and/or vaporising oil is fed to the heated gas flow above a fire test apparatus in the absence of oxygen.

2. The method according to claim 1, wherein the oil is fed to the low-oxygen or oxygen-free part of the heated gas flow.

3. The method according to claim 1 or 2, wherein the oil is heated, in particular by indirect heat exchange, before it is fed to the heated gas flow.

4. The method according to claim 3, wherein the oil is heated to a temperature which is above its flashpoint temperature.

5. The method according to claim 3 or 4, wherein the oil is heated to a temperature which approaches its vaporisation temperature.

6. The method according to any one of claims 3 to 5, wherein the oil is heated indirectly, in particular in an oil conduit with the aid of at least one gas burner (4), wherein a high rate of vaporisation with large amounts of simulated smoke gas can be achieved as a result of the high heat output of the gas burners (4) used.

7. The method according to any one of claims 1 to 6, wherein conveying the oil is ensured by gas pressure, in particular the pressure of the gas which is used to heat the oil, or by a separately provided and especially inert transport gas.

8. The method according to any one of claims 1 to 7, wherein the oil is fed to the heated gas flow by means of a nozzle (6), wherein a high vapour density - for simulating significantly impaired visibility - is in particular achieved by using a jet expander (7).

9. An apparatus for simulating smoke gas in fire tests, **characterised in that** it comprises an oil conveyor (2a, 2b, 2c) which comprises an ascending conveying path which can feed vaporised and/or vaporising oil into the heated gas flow above a fire test apparatus in the absence of oxygen.

10. The apparatus according to claim 9, **characterised in that** it comprises an oil heating device, in particular at least one gas burner (4), which heats the oil in the conveying path (2a, 2b, 2c), in particular an oil conduit (2c), by indirect external application.

11. The apparatus according to claim 9 or 10, **characterised in that** it comprises a gas pressure conveying means for the oil, fed in particular by the pressure of the gas which is used to heat the oil, or by a separately provided and especially inert transport gas.

12. The apparatus according to any one of claims 9 to 11, **characterised in that** it comprises an oil supply (1), a heating and/or conveying gas supply (5), the oil conveying and heating path (2a, 2b, 2c) and the oil heating device (4), especially in a closed and/or independent and advantageously transportable unit.

13. The apparatus according to any one of claims 9 to 12, **characterised in that** an external energy source, for example electricity, is not used to heat and/or vaporise the oil.

14. The apparatus according to any one of claims 9 to 13, **characterised in that** a high vapour density - for simulating significantly impaired visibility - is achieved by using a jet expander (7) at the exit of the oil conveying path.

## Revendications

1. Procédé de simulation d'un gaz de fumée pendant des essais de réaction au feu, dans lequel de l'huile évaporée ou en cours d'évaporation en l'absence d'oxygène est introduite dans l'écoulement de gaz chaud au-dessus d'un dispositif d'essai de réaction au feu.

2. Procédé selon la revendication 1, vans lequel l'huile est introduite dans la partie de l'écoulement de gaz chaud pauvre en oxygène ou sans oxygène.

3. Procédé selon la revendication 1 ou 2, dans lequel l'huile est chauffée avant l'introduction dans l'écoulement de gaz chaud, en particulier par un échange de chaleur indirect.

4. Procédé selon la revendication 3, dans lequel l'huile est chauffée jusqu'à une température qui est supérieure au point d'éclair.

5. Procédé selon la revendication 3 ou 4, dans lequel l'huile est chauffée jusqu'à une température qui atteint sa température d'évaporation.

6. Procédé selon l'une des revendications 3 à 5, dans lequel l'huile est chauffée de manière indirecte, en particulier dans une conduite d'huile, à l'aide d'au moins un brûleur à gaz (4), dans lequel une vitesse d'évaporation élevée avec d'importantes quantités de gaz de fumée simulées peut être réglée en raison d'un rendement calorifique élevé des brûleurs à gaz (4) utilisés.

7. Procédé selon l'une des revendications 1 à 6, dans lequel la circulation d'huile est assurée par une pression de gaz, en particulier par la pression du gaz qui est utilisé pour le chauffage de l'huile, ou par un gaz de transport, particulièrement inerte, prévu séparément.

8. Procédé selon l'une des revendications 1 à 7, dans lequel l'huile de l'écoulement de gaz chaud est introduite au moyen d'une buse (6), dans lequel une densité de vapeur élevée est obtenue pour simuler une opacité importante, en particulier en utilisant un élargisseur de jet (7).

9. Dispositif de simulation d'un gaz de fumée pendant des essais de réaction au feu, **caractérisé en ce qu'**il comporte un dispositif de transport d'huile (2a, 2b, 2c) incluant un circuit de transport montant qui peut introduire de l'huile évaporée ou en cours d'évaporation en l'absence d'oxygène dans l'écoulement de gaz chaud au-dessus d'un dispositif d'essai de réaction au feu.

10. Dispositif selon la revendication 9, **caractérisé en ce qu'**il inclut un dispositif de chauffage d'huile, en particulier au moins un brûleur à gaz (6) qui chauffe l'huile dans le circuit de transport (2a, 2b, 2c), en particulier une conduite d'huile (2c), par un apport extérieur indirect.

11. Dispositif selon la revendication 9 ou 10, **caractérisé en ce qu'**il inclut des moyens de transport de l'huile sous pression de gaz, en particulier alimentés par la pression du gaz qui est utilisé pour le chauffage de l'huile, ou par un gaz de transport, particulièrement inerte, prévu séparément.

12. Dispositif selon l'une des revendications 9 à 11, **caractérisé en ce qu'**il inclut une réserve d'huile (1), une réserve de gaz de chauffage et/ou de gaz d'entraînement (5), le circuit de transport d'huile et de chauffage (2a, 2b, 2c) et le dispositif de chauffage d'huile (4), en particulier dans une unité fermée ou indépendante et avantageusement transportable.

13. Dispositif selon l'une des revendications 9 à 12, **caractérisé en ce qu'**aucune source d'énergie externe, par exemple du courant, n'est utilisée pour le chauffage de l'huile et/ou l'évaporation de l'huile.

14. Dispositif selon l'une des revendications 9 à 13, **caractérisé en ce qu'**une densité de vapeur élevée est obtenue pour simuler une opacité importante, en utilisant un élargisseur de jet (7) à la sortie du circuit de transport d'huile.
